(19) Europäisches Patentamt
European Patent Office
Office européen des brevets

(11) **EP 0 758 181 B1**

(12) **EUROPEAN PATENT SPECIFICATION**

(45) Date of publication and mention
of the grant of the patent:
**12.07.2000 Bulletin 2000/28**

(51) Int Cl.⁷: **H04N 1/60**

(21) Application number: **96112726.3**

(22) Date of filing: **07.08.1996**

(54) **A method for producing an original image data adjusting table for a proof printing system**

Verfahren zur Erzeugung von einer Originalbilddateneinstelltabelle für ein Probedrucksystem

Procédé pour générer une table d'adjustement de données originale d'images dans un système d'essais d'impression

(84) Designated Contracting States:
**DE FR GB**

(30) Priority: **08.08.1995 JP 20215495**

(43) Date of publication of application:
**12.02.1997 Bulletin 1997/07**

(73) Proprietor: **Dainippon Screen Mfg. Co., Ltd.**
**Kamikyo-ku Kyoto 602 (JP)**

(72) Inventor: **Narazaki, Makoto,**
**Dainippon Screen Mfg. Co., Ltd.**
**Kyoto (JP)**

(74) Representative: **Goddar, Heinz J., Dr.**
**FORRESTER & BOEHMERT**
**Franz-Joseph-Strasse 38**
**80801 München (DE)**

(56) References cited:
**EP-A- 0 584 019**      **EP-A- 0 604 755**
**WO-A-93/20648**      **US-A- 5 309 257**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

This invention relates to an adjusting method for adjusting original image data which is to be fed to a proof printing system to make experimental proof prints before making prints by a main printing system and, particularly a method for producing an adjusting table for adjusting original image data to correct a difference in color characteristics between proof prints made by a proof printing system and prints made by a main printing system.

Prior to main printing carried out by feeding original image data to a main printing system, the same original image data is fed to a proof printing system to make an experimental print. How the experimental printing turns out is confirmed beforehand to avoid a large quantity of production of unnecessary and wasteful prints.

In this case, such confirmation cannot be made unless the tint of prints made by the proof printing system corresponds to that of prints made by the main printing system. However, the proof printing system has a mechanism which is not necessarily the same as that of the main printing system and displays a peculiar coloring characteristic depending upon properties of ink. Accordingly, there is a likelihood that prints of the proof printing system have a tint different from those of the main printing system even when the same original image data is fed.

To eliminate the likelihood, adjustment of original image data is carried out before the original image data is fed to a proof printing system so that the output of the proof printing system has the same tint as the output of the main printing system. There have been known the following original image data adjusting table production methods.

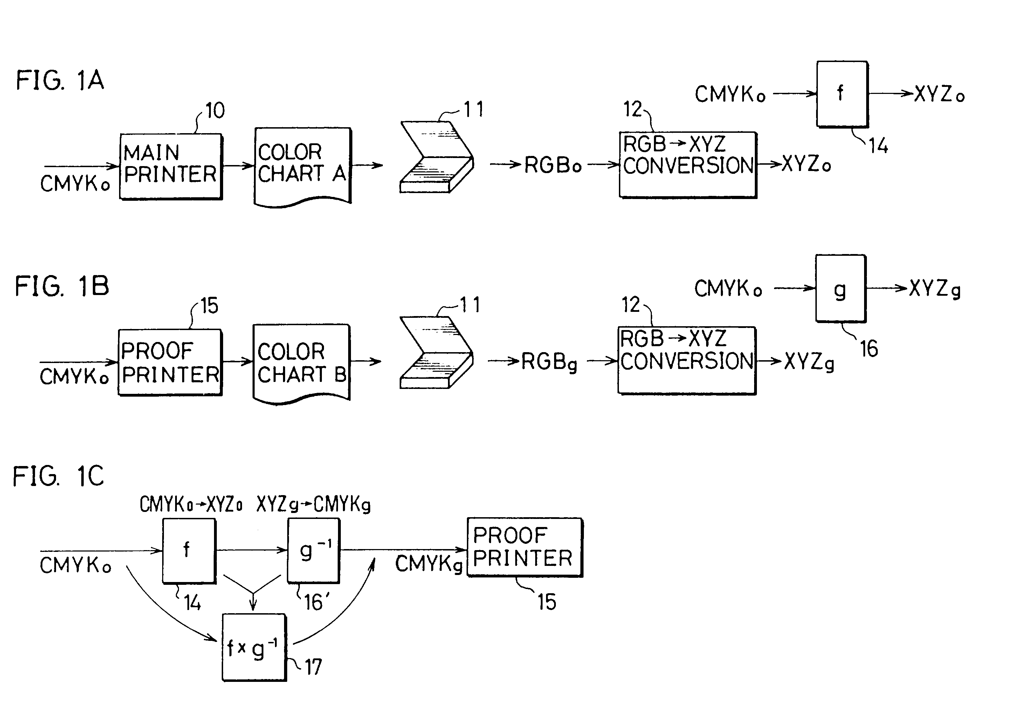

FIGS. 1A to 1C are diagrams showing a first conventional adjusting table production method. Specifically, FIG. 1A shows a procedure in connection with a main printing system, FIG. 1B shows a procedure in connection with a proof printing system, and FIG. 1C is a conceptual diagram showing an adjusting table arranged before the proof printing system.

First, original image data ($CMYK_0$) comprising subtractive primary color components is fed to a main printing system 10. In accordance with the original image data ($CMYK_0$), the main printing system 10 prints out a color chart A comprising all color patches which can be made by the main printing system 10. The respective patches of the color chart A are scanned by a color scanner 11 to obtain primary color image data ($RGB_0$) for the respective patches. The primary color image data ($RGB_0$) are converted via a conversion table 12 into measurement values ($XYZ_0$) of the respective patches. Generally speaking, color scanners generate peculiar primary color image data (RGB) depending on their respective types.
Accordingly, it is necessary to prepare a conversion table for each type of color scanner.

Subsequently, by successively comparing the measurement values ($XYZ_0$) of the respective patches with the original image data ($CMYK_0$), a conversion table 14 is produced which determines a one-to-one correspondence between the original image data ($CMYK_0$) and the measurement values ($XYZ_0$). This correspondence is assumed to be a function f, i.e.,

$$XYZ_0 = f(CMYK_0).$$

Next, in the procedure shown in FIG. 1B, the same original image data ($CMYK_0$) as fed to the main printing system 10 is fed to the proof printing system 15. The proof printing system 15 prints out a color chart B in accordance with the original image data ($CMYK_0$). The respective patches of the color chart B are scanned by the color scanner 11 to obtain primary color image data ($RGB_g$) for the respective patches. The primary color image data ($RGB_g$) are converted via the conversion table 12 to obtain measurement values ($XYZ_g$) of the respective patches.

Subsequently, by successively comparing the measurement values ($XYZ_g$) with the original image data ($CMYK_0$), a conversion table 16 is produced which determines a one-to-one correspondence between the original image data ($CMYK_0$) and the measurement values ($XYZ_g$) This correspondence is assumed to be a function g, i.e.,

$$XYZ_g = g(CMYK_0).$$

Subsequently, the measurement values ($XYZ_0$) and the measurement values ($XYZ_g$) are compared with each other. In the case that these measurement values ($XYZ_0$) and ($XYZ_g$) do not agree with each other, it is necessary to adjust the original image data to be fed to the proof printing system 15. In this adjusting table production method, an adjusting table 17 is provided before the proof printing system.

The adjusting table 17 is produced as follows. First, a conversion table 16', i.e., an inverse function $g^{-1}$ of the function g, for converting the measurement values ($XYZ_g$) into the original image data ($CMYK_0$) is produced. Upon receipt of the measurement values ($XYZ_0$), the conversion table 16' (i.e. $g^{-1}$) outputs image data ($CMYK_g$) which allows the proof printing system 15 having a characteristic of the function g to make a print having the measurement values ($XYZ_0$). Subsequently, the adjusting table 17 is produced by combining the conversion table 14 (i.e., the function f) and the conversion table 16'(i.e., the function $g^{-1}$).

How the adjusting table 17 operates will be described with reference to FIG. 1C. The adjusting table 17 is the combination of the conversion tables 14 and 16'. Accordingly, the original image data ($CMYK_0$) is converted into the measurement values ($XYZ_0$) by the conversion table 14. The obtained measurement values ($XYZ_0$) arc fed to the conversion table 16' and converted into the image data ($CMYK_g$). In this way, the proof printing system 15 makes a print having the measurement values ($XYZ$) in accordance with the original image data ($CMYK_0$). The measurement values of prints of the proof printing system 15 correspond to those of prints of the main printing system 10.

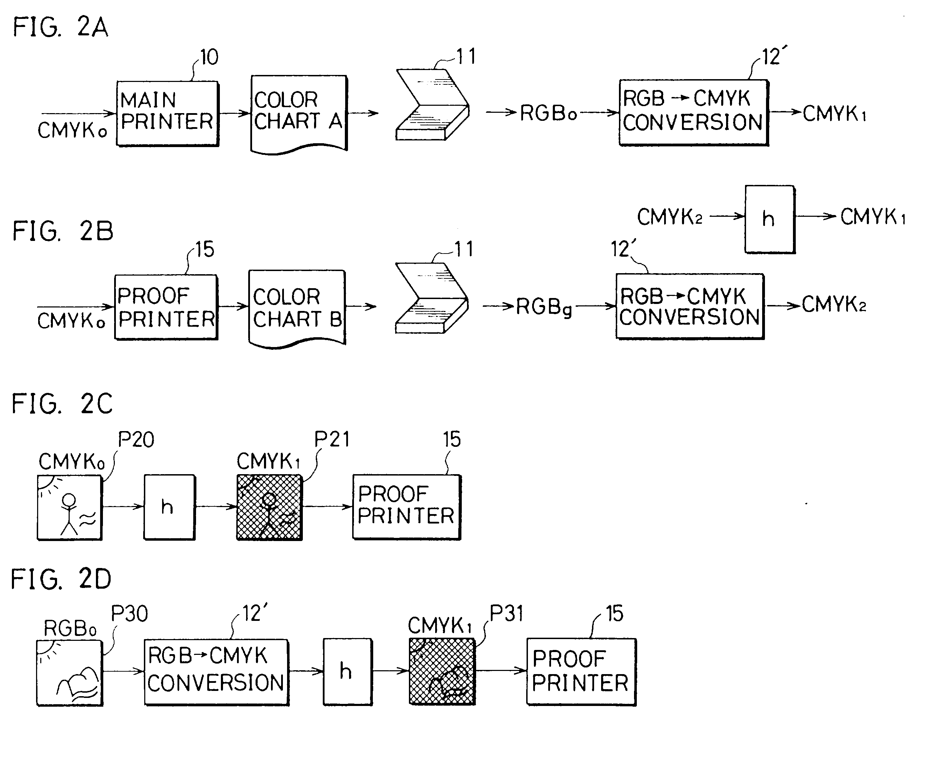

FIGS. 2A to 2D shows a second conventional adjusting table production method. Specifically, FIG. 2A shows a procedure in connection with a main printing system 10, FIG. 2B shows a procedure in connection with a proof printing system 15, FIGS. 2C and 2D show adjusting procedures, respectively.

In the second conventional adjusting table production method, an adjusting table is produced without obtaining measurement values ($XYZ$). Specifically, in FIG. 2A, in a similar manner to the first adjusting table production method, original image data ($CMYK_0$) comprising subtractive primary color components is fed to a main printing system 10. In accordance with the original image data ($CMYK_0$), the main printing system 10 prints out a color chart A comprising all color patches which can be made by the main printing system 10. The respective patches of the color chart A are scanned by a color scanner 11 to obtain primary color image data ($RGB_0$) for the respective patches. Subsequently, secondary subtractive primary color image data ($CMYK_1$) is obtained from the primary color image data ($RGB_0$) using a conversion table 12' prepared in advance.

Next, in the procedure shown in FIG. 2B, the same original image data ($CMYK_0$) is fed to a proof printing system 15. The proof printing system 15 prints out a color chart B in accordance with the original image data ($CMYK_0$). The respective patches of the color chart B are scanned by the color scanner 11 to obtain primary color image data ($RGB_g$) for the respective patches. Subsequently, secondary subtractive primary color image data ($CMYK_2$) is obtained from the primary color image data ($RGB_g$) using the conversion table 12'.

Thereafter, an adjusting table h for adjusting the image data ($CMYK_2$) to the image data ($CMYK_1$) is produced.

In the case of original image data comprising subtractive primary color components, as shown in FIG. 2C, the adjusting table h is provided before the proof printing system 15. The original image data ($CMYK_0$) is adjusted to subtractive primary color image data ($CMYK_1$) by the adjusting table h. The adjusted image data ($CMYK_1$) is fed to the proof printing system 15

In the case of original image data comprising primary three color components, as shown in FIG. 2D, the adjusting table h is provided before the proof printing system 15. Further, the conversion table 12' is provided before the adjusting table h. The original primary three color image data ($RGB_0$) is converted into subtractive primary color image data ($CMYK_0$) via the conversion table 12', and the image data ($CMYK_0$) is adjusted to subtractive primary color image data ($CMYK_1$) by the adjusting table h. Thereafter, the adjusted subtractive primary color image data ($CMYK_1$) is fed to the proof printing system 15.

In the first conventional adjusting table production method, as mentioned above, the adjusting table 17 is provided before a proof printing system 15. The adjusting table 17 is produced by producing the conversion table 14 for determining the correspondence between the original image data ($CMYK_0$) to be fed to the main printing system 10 and the measurement values ($XYZ_0$) of the print of the main printing system 10, the conversion table 16 for determining the correspondence between the original image data ($CMYK_0$) to be fed to the proof printing system 15 and the measurement values ($XYZ_g$) of the print of the proof printing system 15, and combining the conversion table 14 with the inverse of the conversion table 16. Accordingly, there has been the necessity of producing the conversion table 14 and the conversion table 16 in addition to the conversion tables 12.

In the second conventional adjusting table production method, the conversion table h is provided before the proof printing system 15. The conversion table h is produced by comparing the secondary subtractive primary color image data ($CMYK_1$) and ($CMYK_2$). The secondary image data ($CMYK_1$) and ($CMYK_2$) are produced using the conversion table 12' for converting primary color image data ($RGB$) to subtractive primary color image data ($CMYK$).

In the second conventional adjusting table production method, it is not required to obtain measurement values. However, the conversion table 12' is provided with gamut mapping and setup conditions. Accordingly, the correspondence between the primary color image data ($RGB$) and the subtractive primary color image data ($CMYK$) is not a univocal relationship.

More specifically, in the case of a transparent document, primary color image data ($RGB$) are converted into subtractive primary color image data ($CMYK$) in such a way that measurement values of the document do not agree with those of prints. This is because, from a colorimetrical point of view, coloring regions (gamut) differ between the transparent document and the printed material. This way is called a gamut mapping. In many cases, the gamut mapping for offsetting a difference in the coloring regions can be freely changed by a user. In view of the fact, it is impossible to produce a conversion table for converting primary color image data ($RGB$) into image data ($CMYK$) in one-to-one correspondence.

Accordingly, the second conventional adjusting table production method cannot produce an adjusting table operable to accurately adjust original image data.

WO-A-93/20648 discloses a techniques for colour correction with a four-dimensional look-up table.

## SUMMARY OF THE INVENTION

It is an object of the present invention to provide an original image data adjusting table production method which has overcome the above-mentioned problems residing in the prior art.

It is another object of the present invention to provide a method for producing an original image data adjusting table which can securely make the tint of prints made by a proof printing system correspond with that of prints made by a main printing system.

The present invention is directed to a method for producing an original image data adjusting table for a proof printing system, comprising the steps of: scanning a color image made by a main printing system in accordance with original image data comprising subtractive primary color components to produce first primary color image data; producing a reference conversion table to convert the first primary color image data into a main secondary subtractive primary color image data which is identical to the original image data; scanning a color image made by a proof printing system in accordance with the same original image data to produce second primary color image data; converting the second primary color image data into a proof secondary subtractive primary color image data by the reference conversion table; and producing an adjusting table to convert the proof secondary subtractive primary color image data to the main secondary subtractive primary color image data.

It may be preferable to make a color chart comprising all color patches which the main printing system is able to make.

The adjusting table may be produced by: preparing a specified number of proof secondary subtractive primary color image data; finding respective correspondences between the prepared specified number of proof secondary subtractive primary color image data and the main secondary subtractive primary color image data; and determining an adjusting value for each proof secondary subtractive primary color image data based on the found correspondences.

The adjusting table may be produced by further calculating an approximate adjusting curve based on the determined adjusting values. The approximate adjusting curve may be preferably calculated by a least squares method. Also, adjusting values other than the determined adjusting values may be calculated based on the determined adjusting values by proportional distribution method.

In this inventive production method, a reference conversion table is produced. The reference conversion table ensures conversion of a first primary color image data into a main secondary subtractive primary color image data which is identical to original image data. A second primary color image data is converted into a proof secondary subtractive primary color image data by the reference conversion table. Based on the main and proof secondary subtractive primary color image data, an adjusting table is produced.

The reference conversion table eliminates the influence of its contents, e.g., gamut mapping, setup conditions, because the characteristic of the table is one to one correspondence. This ensures direct comparison between the proof secondary subtractive primary color image data and the original image data. Accordingly, an accurate adjusting table can be produced.

Also, this inventive method needs no measurement values. Thus, an accurate adjusting table can be produced easily and for a shorter period of time.

Further, in the case of using a color chart comprising all color patches which the main printing system can make, more reliable adjusting table can be produced. The determination of adjusting values can simplify the production of adjusting table. The approximate adjusting curve will enable fine adjustment of original image data.

These and other objects, features and advantages of the present invention will become more apparent upon a reading of the following detailed description and accompanying drawings.

## BRIEF DESCRIPTION OF THE DRAWINGS

FIGS. 1A to 1C are diagrams showing the first conventional original image data adjusting table production method as described above, FIG. 1A showing the procedure in connection with the main printing system, FIG. 1B showing the procedure in connection with the proof printing system, and FIG. 1C showing the arrangement of the adjusting table;

FIGS. 2A to 2D are diagrams showing the second conventional original image adjusting table production method likewise described above, FIG. 2A showing the procedure in connection with the main printing system, FIG. 2B showing the procedure in connection with the proof printing system, FIGS. 2C and 2D showing the arrangement of the adjusting table;

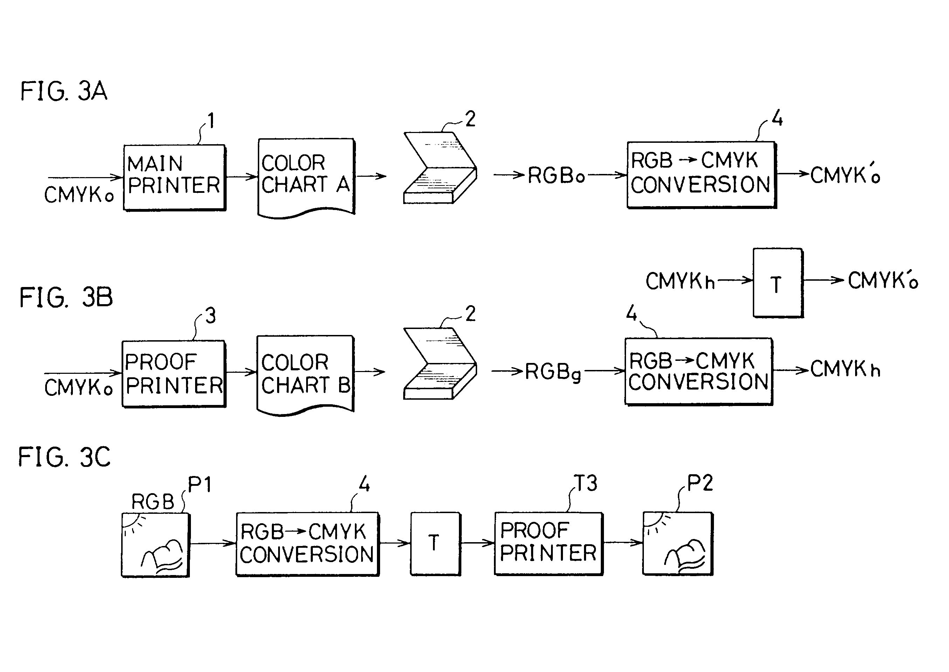

FIGS. 3A to 3C are diagrams showing an original image data adjusting table production method according to the invention, FIG. 3A showing a procedure in connection with a main printing system, FIG. 3B showing a procedure in connection with a proof printing system, and FIG. 3C showing an arrangement of an adjusting table; and

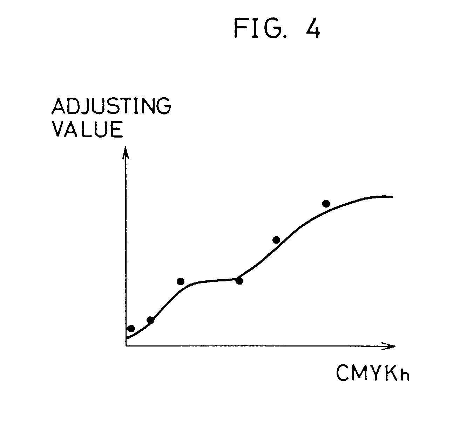

FIG. 4 is a graph showing an interpolation used in the inventive original image data adjusting table production method.

## DETAILED DESCRIPTION OF THE PREFERRED EMBODIMENTS OF THE INVENTION

Referring to FIGS. 3A to 3C showing an original image data adjusting table production method according to the invention, indicated at 1 is a main printing system for performing main printing. Original image data comprising subtractive primary color components C (cyan), M (magenta), Y (yellow) and K (black) is fed to the main printing system 1. The original image data is pixel information of a given color image. The main printing system 1 prints a color image on a printing sheet in accordance with the original image data.

It should be noted that a color image is produced by superimposing respective images of color components C, M, Y and K in this order and the image gradation is expressed by changing the size of mesh (in the case of mesh printing) or the density of lines (in the case of line printing).

Also, indicated at 3 is a proof printing system for performing proof printing. A usual color printer is used as the proof printing system 3. The same original image data comprising subtractive primary color components C, M, Y and K as fed to the main printing system 1 is fed to the proof printing system 3. In a similar manner to the main printing system, the proof printing system 3 prints a color image on a printing sheet in accordance with the original image data.

Indicated at 2 is a color scanner for reading a color image printed on a printing sheet to produce respective primary color image data of R (red), G (green) and B (blue). The color scanner 2 includes a light source for illuminating a color image on the printing sheet, a photosensor array for converting light reflected from or transmitted through the printing sheet into electrical signals corresponding to an amount of the light, and red, green, and blue spectral filters provided on a front surface of the photosensor array for color separation. The scanning is carried out in the condition of external light being blocked.

Next, production of an adjusting table will be described. In FIG. 3A, original image data $(CMYK_0)$ is fed to the main printing system 1 to produce a color chart A. The color chart A comprises all color patches which can be made by the main printing system 1 or a specified number of color patches. The color patches are arranged in the form of a palette.

The color chart A is scanned by the color scanner 2 to produce primary color image data $(RGB_0)$. Subsequently, a reference conversion table 4 for converting the primary color image data $(RGB_0)$ into secondary subtractive primary color image data $(CMYK_0')$ is produced. The secondary image data $(CMYK_0')$ is identical to the original image data $(CMYK_0)$.

First, the primary color image data $(RGB_0)$ are experimentally converted into provisional secondary image data $(CMYK_0')$ by an arbitrary conversion table 4. Based on the provisional secondary image data $(CMYK_0')$, the contents of the given conversion table 4 are rewritten or changed so that the converted secondary image data $(CMYK_0')$ becomes identical to the original image data $(CMYK_0)$. The contents of the given conversion table 4 which make the secondary image data $(CMYK_0')$ agree with the original image data $(CMYK_0)$ are determined as the contents of a reference conversion table 4.

A rewritable memory or RAM memory is preferably used to store the reference conversion table 4. Alternatively, it may be appreciated to store the reference conversion table 4 in a ROM or the like.

Further, it should be noted that the raw and secondary subtractive primary color image data are identified by the different letters $(CMYK_0)$ and $(CMYK_0')$ to make the description easier although they are identical data.

Subsequently, in FIG. 3B, the same original subtractive primary color image data $(CMYK_0)$ is fed to the proof printing system 3 which in turn prints out a color chart B in accordance with the original image data $(CMYK_0)$. The respective patches of the color chart B is scanned by the color scanner 2 to obtain primary color image data $(RGB_g)$ for the respective patches. Using the above-produced reference conversion table 4, the primary color image data $(RGB_g)$ are converted into secondary image data $(CMYK_h)$.

Thereafter, an adjusting table T is produced which coverts the secondary image data $(CMYK_h)$ into the secondary image data $(CMYK_0')$.

The adjusting table T has a characteristic similar to the composite function of the functions f and $g^{-1}$ in the first conventional method. As mentioned above, the original image data $(CMYK_0)$ and the secondary image data $(CMYK_0')$ are identical to each other. Accordingly, finding a correspondence from the secondary image data $(CMYK_h)$ to the secondary image data $(CMKY_0')$ is equivalent to finding a correspondence from the secondary image data $(CMYK_h)$ to the original image data $(CMYK_0)$.

The correspondence from the secondary subtractive primary color image data $(CMYK_h)$ to the primary color image data $(RGB_g)$ has a function similar to the function f with respect to the correspondence from the original image data $(CMYK_0)$ to the measurement values $(XYZ_0)$ in the conversion table 14 in the first conventional method. Also, the correspondence from the primary color image data $(RGB_g)$ to the original image data $(CMYK_0)$ has a function similar to the inverse of the function g with respect to the correspondence from the original image data $(CMYK_0)$ to the measurement values $(XYZ_g)$ in the conversion table 16 in the first conventional method. Thus, the adjusting table T to adjust the secondary image data $(CMYK_h)$ to the original image data $(CMYK_0)$ has a characteristic defined by a composite function of the functions similar to the functions f and $g^{-1}$.

The adjusting table T is produced by finding respective correspondences between the secondary image data (CMYK$_h$) and the original image data (CMYK$_0$). However, if the number of secondary image data (CMYK$_h$) is small, it is difficult to cause the proof printing system 3 to make prints which highly agree with prints made by the main printing system 1. In this case, as shown in FIG. 4, the following interpolation is applied.

In FIG. 4, the horizontal axis represents secondary image data (CMYK$_h$) while the vertical axis represents adjusting values for the adjusting table T which are set based on secondary image data (CMYK$_h$). Based on these dots, an approximate adjusting curve F is calculated by a least squares method. The curve F in the graph represents the adjusting curve. The adjusting table T has values set for respective subtractive primary components C (cyan), M (magenta), Y (yellow), and K (hlack) of image data as follows:

$$C_0 = F_C(CMYK_h)$$

$$M_0 = F_M(CMYK_h)$$

$$Y_0 = F_Y(CMYK_h)$$

$$K_0 = F_K(CMYK_h).$$

In this way, the adjusting table T can provide a continuous correspondences between adjusting values and secondary image data (CMYK$_h$).

It is preferable to store the adjusting curve F in a memory and calculate an adjusting value for a different proof printing system in accordance with the adjusting curve F.

In the case that there are many secondary image data (CMYK$_h$), adjusting values may be set based on the secondary image data (CMYK$_h$) and stored in a memory instead of calculating the adjusting curve F. In this case, adjusting values other than the adjusting values set based on the actually obtained secondary image data (CMYK$_h$) can be simply obtained based on a distance between neighboring set values using a proportional distribution method.

The proportional distribution method can provide simple setting of adjusting values for a wide range of image data. Also, this proportional distribution method may be applied for each color region. In this case, a specified boundary processing may be applied to cope with discontinuity at boundary lines between the neighboring regions.

The produced adjusting table T is arranged prior to the proof printing system 3. Original image data (CMYK$_0$) is fed to the adjusting table T in which the original image data (CMYK$_0$) is adjusted. The adjusted original image data (CMYK) is then fed to the proof printing system 3.

In the case that original image data P1 comprises primary color image data (RGB) as shown in FIG. 3C, the original image data RGB is converted into subtractive primary color image data (CMYK) by the reference conversion table 4. Thereafter, the converted image data (CMYK) is adjusted by the adjusting table T and then fed to the proof printing system 3. A print P2 made by the proof printing system 3 will agree with prints made by the main printing system 1.

In this embodiment, the reference conversion table 4 which can convert the primary color image data (RGB$_0$) into the secondary subtractive primary color image data (CMYK$_0$) is first produced. Thereafter, the reference conversion table 4 is used to convert the primary color image data (RGB$_g$) for the proof printing system. The comparison of prints made by the proof printing system 3 to those made by the main printing system 1 can be easily carried out. Also, a tint variation of prints of the proof printing system 3 itself can be known with ease.

Further, such tint variations can be known in a color space of subtractive primary color components CMYK. This will make it possible to produce an adjusting table for setup of a proof printing system and an adjusting table taking into consideration a gamut mapping.

Moreover, it is not necessary to convert primary color image data (RGB) into measurement data (XYZ). Thus, the operation and devices for adjusting table production can be simplified.

In the foregoing embodiment, a color chart having all color patches is made for scanning. However, the present invention is not limited to this. It may be possible to use anything which has at least color regions sufficient to produce the reference conversion table 4.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

The features disclosed in the foregoing description, in the claims and/or in the accompanying drawings may, both separately and in any combination thereof, be material for realising the invention in diverse forms thereof.

## Claims

1. A method for producing an original image data adjusting table for a proof printing system, comprising the steps of:

   scanning (Fig.3, 2) a color image made by a main printing system (1) in accordance with original image data (CMYK$_o$) comprising sub-

tractive primary color components to produce first primary color image data ($RGB_o$);

producing a reference conversion table (4) to convert the first primary color image data into a main secondary subtractive primary color image data ($CMYK_o'$) which is identical to the original image data ($CMYK_o$);

scanning a color image made by a proof printing system (3) in accordance with the same original image data to produce second primary color image data ($RGB_g$);

converting the second primary color image data into a proof secondary subtractive primary color image data ($CMYK_h$) by the reference conversion table (4); and

producing an adjusting table (T) to convert the proof secondary subtractive primary color image data ($CMYK_h$) to the main secondary subtractive primary color image data ($CMYK_o'$).

2. A method as defined in claim 1, wherein the color image is a color chart comprising all color patches which the main printing system is able to make.

3. A method as defined in claim 1, wherein the adjusting table is produced by:

preparing a specified number of proof secondary subtractive primary color image data;

finding respective correspondences between the prepared specified number of proof secondary subtractive primary color image data and the main secondary subtractive primary color image data; and

determining an adjusting value for each proof secondary subtractive primary color image data based on the found correspondences.

4. A method as defined in claim 3, wherein the adjusting table is produced by further calculating an approximate adjusting curve based on the determined adjusting values.

5. A method as defined in claim 4, wherein the approximate adjusting curve is calculated by a least squares method.

6. A method as defined in claim 3, wherein adjusting values other than the determined adjusting values are calculated based on the determined adjusting values by a proportional distribution method.

**Patentansprüche**

1. Verfahren zum Erzeugen einer Vorlagebilddaten-Einstelltabelle für ein Probedrucksystem, mit den Schritten:

Abtasten (Figur 3, 2) eines Farbbildes, das von einem Hauptdrucksystem (1) entsprechend Vorlagebilddaten ($CMYK_0$) erzeugt worden ist, subtraktive Primärfarbenkomponenten aufweisend, um erste Primärfarben-Bilddaten ($RGB_0$) zu erzeugen;

Erzeugen einer Referenz-Konversionstabelle (4), um die ersten Primärfarben-Bilddaten in sekundäre subtraktive Haupt-Primärfarben-Bilddaten ($CMYK_0'$) umzuwandeln, die mit den Vorlagebilddaten ($CMYK_0$) identisch sind;

Abtasten eines Farbbildes, das von einem Probedrucksystem (3) erstellt worden ist, entsprechend denselben Vorlagedaten, um zweite Primärfarben-Bilddaten ($RGB_g$) zu erzeugen;

Umwandeln der zweiten Primärfarben-Bilddaten in sekundäre subtraktive Probe-Primärfarben-Bilddaten ($CMYK_h$) mittels der Referenz-Konversionstabelle (4) und

Erzeugen einer Einstelltabelle (T), um die sekundären subtraktiven Probe-Primärfarben-Bilddaten ($CMYK_h$) in die sekundären subtraktiven Haupt-Primärfarben-Bilddaten ($CMYK_0'$) umzuwandeln.

2. Verfahren nach Anspruch 1, bei dem das Farbbild ein Farbchart ist, welches alle Farbflecken aufweist, die das Hauptdrucksystem erstellen kann.

3. Verfahren nach Anspruch 1, bei dem die Einstelltabelle erzeugt wird durch:

Vorbereiten einer festgelegten Anzahl von sekundären subtraktiven Probe-Primärfarben-Bilddaten;

Auffinden entsprechender Korrespondenzen zwischen der vorbereiteten festgelegten Anzahl von sekundären subtraktiven Probe-Primärfarben-Bilddaten und den sekundären subtraktiven Haupt-Primärfarben-Bilddaten; und

Festlegen eines Einstellwertes für alle sekundären subtraktiven Probe-Primärfarben-Bilddaten basierend auf den aufgefundenen Korrespondenzen.

4. Verfahren nach Anspruch 3, bei dem die Einstelltabelle erzeugt wird, indem weiter eine angenäherte Einstellkurve basierend auf den festgelegten Einstellwerten berechnet wird.

5. Verfahren nach Anspruch 4, bei dem die angenäherte Einstellkurve durch ein Verfahren der kleinsten Quadrate berechnet wird.

6. Verfahren nach Anspruch 3, bei dem andere Einstellwerte als die festgelegten Einstellwerte basierend auf den festgelegten Einstellwerten durch ein Proportionalverteilungsverfahren berechnet werden.

## Revendications

1. Procédé de production d'une table d'ajustement de données d'une image originale destiné à un système d'impression d'épreuves comprenant les étapes consistant à :

analyser (figure 3, 2) une image en couleur faite par un système d'impression principal (1) conformément à des données d'une image originale (CMYKo) comprenant des composantes de couleurs primaires soustractives afin de produire des premières données d'image de couleurs primaires (RGBo),
produire une table de conversion de référence (4) afin de convertir les données de la première image de couleurs primaires en des données d'image de couleurs primaires soustractives (CMYK'o) qui sont identiques aux données de l'image originale (CMYKo),
analyser une image en couleur faite par un système d'impression d'épreuve (3) conformément aux même données de l'image originale afin de produire des secondes données d'image de couleurs primaires (RGBg),
convertir les secondes données d'image de couleurs primaires en des données d'image de couleurs primaires soustractives secondaires d'épreuve (CMYKh) grâce à la table de conversion de référence (4), et
produire une table d'ajustement (T) afin de convertir les données d'image de couleurs primaires soustractives secondaires d'épreuve (CMYKh) en les données d'image de couleurs primaires soustractives secondaires principales (CMYK'o).

2. Procédé selon la revendication 1, dans lequel l'image en couleur est un tableau de couleur comprenant toutes les plages de couleur que le système d'impression principal est capable de réaliser.

3. Procédé selon la revendication 1, dans lequel le table d'ajustement est produite par :

la préparation d'un nombre spécifié de données d'image de couleurs primaires soustractives secondaires d'épreuve,
la découverte des correspondances respectives entre le nombre spécifié préparé de données d'image de couleurs primaires soustractives secondaires d'épreuve et les données d'image de couleurs primaires soustractives secondaires principales, et
la détermination d'une valeur d'ajustement pour chacune des données d'image de couleurs primaires soustractives secondaires d'épreuve sur la base des correspondances trouvées.

4. Procédé selon la revendication 3, dans lequel la table d'ajustement est produite en calculant en outre une courbe d'ajustement approchée fondée sur les valeurs d'ajustement déterminées.

5. Procédé selon la revendication 4, dans lequel la courbe d'ajustement approchée est calculée par un procédé par les moindres carrés.

6. Procédé selon la revendication 3, dans lequel les valeurs d'ajustement autres que les valeurs d'ajustement déterminées sont calculées sur la base des valeurs d'ajustement déterminées grâce à un procédé de répartition proportionnelle.

EP 0 758 181 B1

FIG. 1A

CMYK_o → | MAIN PRINTER | (10) → | COLOR CHART A | (11) → RGB_o → | RGB→XYZ CONVERSION | (12) → XYZ_o

CMYK_o → | f | (14) → XYZ_o

FIG. 1B

CMYK_o → | PROOF PRINTER | (15) → | COLOR CHART B | (11) → RGB_g → | RGB→XYZ CONVERSION | (12) → XYZ_g

CMYK_o → | g | (16) → XYZ_g

FIG. 1C

$CMYK_o \to XYZ_o$   $XYZ_g \to CMYK_g$

CMYK_o → | f | (14) → | $g^{-1}$ | (16') → CMYK_g → | PROOF PRINTER | (15)

| $f \times g^{-1}$ | (17)

FIG. 2A

$CMYK_0$ → MAIN PRINTER [10] → COLOR CHART A [11] → $RGB_0$ → RGB→CMYK CONVERSION [12′] → $CMYK_1$

FIG. 2B

$CMYK_2$ → h → $CMYK_1$

$CMYK_0$ → PROOF PRINTER [15] → COLOR CHART B [11] → $RGB_g$ → RGB→CMYK CONVERSION [12′] → $CMYK_2$

FIG. 2C

$CMYK_0$ [P20] → h → $CMYK_1$ [P21] → PROOF PRINTER [15]

FIG. 2D

$RGB_0$ [P30] → RGB→CMYK CONVERSION [12′] → h → $CMYK_1$ [P31] → PROOF PRINTER [15]

EP 0 758 181 B1

EP 0 758 181 B1

## FIG. 3A

CMYKo → [MAIN PRINTER] (1) → [COLOR CHART A] (2) → → RGBo → [RGB → CMYK CONVERSION] (4) → CMYK'o

## FIG. 3B

CMYKh → [T] → CMYK'o

CMYKo → [PROOF PRINTER] (3) → [COLOR CHART B] (2) → → RGBg → [RGB → CMYK CONVERSION] (4) → CMYKh

## FIG. 3C

RGB (P1) → [RGB → CMYK CONVERSION] (4) → [T] → [PROOF PRINTER] (T3) → (P2)

FIG. 4